# EUROPÄISCHE PATENTSCHRIFT

(11) **EP 4 476 102 B1**
(45) Veröffentlichungstag und Bekanntmachung des Hinweises auf die Patenterteilung: **03.06.2026**
(21) Anmeldenummer: 22829551.5
(22) Anmeldetag: 01.12.2022
(51) Int. Cl.: B60T 7/04, B60T 7/06

(54) **FAHRZEUG-BEFESTIGUNGSANORDNUNG**
VEHICLE SECURING ARRANGEMENT
AGENCEMENT DE SÉCURISATION DE VÉHICULE

(30) Priorität: 08.02.2022 DE 102022102913
(43) Veröffentlichungstag der Anmeldung: 18.12.2024
(73) Patentinhaber: Audi AG, 85045 Ingolstadt (DE)
(72) Erfinder: HANISCH, Thomas, 91795 Dollnstein (DE)
(86) Internationale Anmeldenummer: PCT/EP2022/084104
(87) Internationale Veröffentlichungsnummer: WO 2023/151846

(56) Entgegenhaltungen:
- DE-A1- 1 944 785
- DE-A1- 10 046 634
- DE-A1- 19 606 427
- US-A- 6 082 219

## Beschreibung

Die Erfindung betrifft eine Fahrzeug-Befestigungsanordnung nach dem Oberbegriff des Patentanspruches 1.

An der, den Fahrzeuginnenraum nach fahrzeugvorne begrenzenden Stirnwand eines Fahrzeugs ist im fahrerseitigen Fußraum ein Fußhebelwerk montiert, an dem unter anderem ein Bremspedal schwenkbar angelenkt ist. Das Bremspedal ist über eine Betätigungsstange mit einem Bremsgerät in kraftübertragender Verbindung. Dieses ist an einer, dem Fahrzeuginnenraum abgewandten, fahrzeugvorderen Seite der Spritzwand positioniert. Die Betätigungsstange wird vom Bremsgerät durch einen Spritzwanddurchlass nach fahrzeughinten in den Fahrzeuginnenraum geführt und dort an einer bremspedalseitigen Anbindungsstelle kraftübertragend angebunden. Das Bremsgerät ist in einer gängigen Fahrzeug-Befestigungsanordnung unter Zwischenlage der Spritzwand über Verschraubungen mit dem Fußhebelwerk verspannt.

Im Gegensatz dazu ist bei einer Fahrzeug-Befestigungsanordnung aufgrund baulicher Gegebenheiten das Bremsgerät nicht mehr direkt unter Zwischenlage der Spritzwand am Pedalbock angebunden. Vielmehr ist das Bremsgerät an einer fahrzeugvorderen Seite einer Bremsgeräte-Tragstruktur, insbesondere Spritzwand, angeordnet, während der Pedalbock an einer fahrzeughinteren Seite einer von der Spritzwand separaten Pedalbock-Tragstruktur angeordnet ist. Die Bremsgeräte-Tragstruktur und die Pedalbock-Tragstruktur sind über einen Längsversatz voneinander beabstandet. Im Stand der Technik müssen die Bremsgeräte-Tragstruktur und die Pedalbock-Tragstruktur bauteilstabil sowie materialintensiv mit einer entsprechend großen Blechdicke ausgeführt sein, damit die bei einer Bremsbetätigung entstehenden Betätigungskräfte betriebssicher aufgenommen werden können. Aus der US 6 082 219 A ist eine gattungsgemäße Fahrzeug-Befestigungsanordnung bekannt. Aus der DE 100 46 634 A1 ist eine weitere Fahrzeug-Befestigungsanordnung bekannt. Aus der DE 100 11 930 B4 ist eine Vorrichtung an Kraftfahrzeugen zum Absorbieren von kinetischer Energie bei einem Fahrzeugaufprall bekannt. Aus der EP 3 456 610 A1 ist eine Kraftübertragungsstruktur in einem Fahrzeug bekannt. Aus der DE1944785A1 ist eine Fahrzeug-Befestigungsanordnung bekannt.

Die Aufgabe der Erfindung besteht darin, eine Fahrzeug-Befestigungsanordnung bereitzustellen, bei der im Vergleich zum Stand der Technik in konstruktiv einfacher Weise eine betriebssichere Anbindung des Bremsgeräts und des Pedalbocks ermöglicht ist.

Die Aufgabe ist durch die Merkmale des Anspruches 1 gelöst. Bevorzugte Weiterentwicklungen der Erfindung sind in den Unteransprüchen offenbart. Die Erfindung geht von einer Fahrzeug-Befestigungsanordnung aus, bei der ein Bremspedal an einem Pedalbock angelenkt ist. Das Bremspedal ist über eine Betätigungsstange mit einem Bremsgerät kraftübertragend verbunden. Das Bremsgerät kann an einer fahrzeugvorderen Seite einer Bremsgeräte-Tragstruktur, insbesondere Spritzwand, angeordnet sein. Demgegenüber kann der Pedalbock an einer fahrzeughinteren Seite einer Pedalbock-Tragstruktur angeordnet sein, die über einen Längsversatz von der Bremsgeräte-Tragstruktur beabstandet ist. Gemäß dem kennzeichnenden Teil des Anspruchs 1 weist die Befestigungsanordnung zumindest einen Abstandhalter auf. Dieser überbrückt den Längsversatz zwischen der Bremsgeräte-Tragstruktur und der Pedalbock-Tragstruktur. Der Abstandhalter ist an einer fahrzeugvorderen Fügestelle, bevorzugt Schraubstelle, am Bremsgerät angebunden. Zudem ist der Abstandhalter an einer fahrzeughinteren Fügestelle, insbesondere Schraubstelle, am Pedalbock angebunden. Speziell bei einer Bremspedalbetätigung wirkt der Abstandhalter in der Fahrzeuglängsrichtung als ein bauteilsteifer Zuganker, der einen Kraftpfad zwischen dem Bremsgerät und dem Pedalbock bereitstellt, in dem sich eine, der Betätigungskraft entgegenwirkende Ausgleichskraft aufbaut. Auf diese Weise wird sowohl die Pedalbock-Tragstruktur als auch die Bremsgeräte-Tragstruktur kräftemäßig entlastet. Von daher können die beiden Tragstrukturen mit reduzierter Blechdicke gefertigt werden.

In einer bevorzugten Ausführungsvariante ist die Fahrzeug-Befestigungsanordnung im Hinblick auf einen Frontalcrash wie folgt ausgeführt: Bei einem solchen Frontalcrash wirkt eine nach fahrzeughinten gerichtete Crashkraft auf das Bremsgerät ein. Dadurch wird der Abstandhalter auf Druck beansprucht. Im Gegensatz zu einer Zugbeanspruchung verhält sich der Abstandhalter bei einer Druckbelastung nachgiebig. Dadurch kann eine Blockbildung des Abstandhalters im Crashfall verhindert werden. Der Abstandhalter wird daher im Crashfall nicht oder zumindest weniger stark in Richtung Fahrzeuginnenraum verlagert.

In einer technischen Umsetzung des oben erwähnten crashaktiven Abstandhalters kann dieser im Frontalcrash als ein in Fahrzeuglängsrichtung verformbares Deformationselement wirken, das unter Verformung Crashenergie abbaut.

In einer konstruktiv einfachen Ausgestaltung kann der Abstandhalter eine Kolben-Zylinder-Einheit sein, und zwar mit einer Zylinderhülse und einem darin teleskopartig verschiebbar geführten Kolben. Der Kolben des Abstandhalters kann über seine Kolbenstange an der einen Fügestelle angebunden sein, während die Zylinderhülse an der anderen Fügestelle angebunden sein kann.

Im Crashfall ist der Kolben in einer Druckrichtung über einen Crashhubweg innerhalb der Zylinderhülse hubverstellbar. Besonders bevorzugt ist es, wenn im Crashfall der Kolben unter Verformung des Kolbens und/oder der Zylinderhülse über den Crashhubweg verstellt wird. In diesem Fall kann der Crashhubweg erst dann freigegeben werden, wenn die einwirkende Crashkraft einen vordefinierten Grenzwert (Losbrechkraft) überschreitet. Im normalen Fahrbetrieb kann dagegen der Kolben in Zugrichtung mit der Ausgleichkraft gegen einen mechanischen Hubanschlag der Zylinderhülse gedrückt werden. Im normalen Fahrbetrieb ist daher der Kolben ortsfest in der Zylinderhülse positioniert.

Für eine einwandfreie Kraftübertragung ist es bevorzugt, wenn der Abstandhalter mit seinen Stirnseiten jeweils auf der Pedalbock-Tragstruktur und auf der Bremsgeräte-Tragstruktur abgestützt ist. Dabei kann an der fahrzeugvorderen Schraubstelle das Bremsgerät unter Zwischenlage der Bremsgeräte-Tragstruktur mit dem Abstandhalter verspannt sein. In gleicher Weise kann an der fahrzeughinteren Schraubstelle der Pedalbock unter Zwischenlage der Pedalbock-Tragstruktur mit dem Abstandhalter verspannt sein.

Bei einer Ausführung des Abstandhalters als Kolben-Zylinder-Einheit kann sich der folgende Zusammenbauzustand ergeben: So kann an der fahrzeughinteren Schraubstelle der Pedalbock unter Zwischenlage der Pedalbock-Tragstruktur mit einem Zylinderboden der Zylinderhülse des Abstandhalters verspannt sein. In gleicher Weise kann an der fahrzeugvorderen Schraubstelle das Bremsgerät unter Zwischenlage der Bremsgeräte-Tragstruktur mit einem Kolbenstangenkopf des Abstandhalters verschraubt sein. In diesem Fall ist im normalen Fahrbetrieb der Kolben an einem kolbenstangenseitigen Endanschlag der Zylinderhülse in Anlage, wodurch eine Kolbenbewegung bei Zugbelastung des Abstandhalters (das heißt bei normaler Bremspedalbetätigung) unterbunden ist.

Zudem kann der Kolben in einer Formschlussverbindung mit der Hülsenwand der Zylinderhülse sein. Auf diese Weise ist im normalen Fahrbetrieb eine Crashhubbewegung des Kolbens gehemmt. Erst durch Einwirken einer ausreichend großen Crashkraft kann die Formschlussverbindung gelöst und dadurch der Crashhubweg freigegeben werden. Zur Ausbildung der Formschlussverbindung kann der Kolben eine umlaufende Ringnut aufweisen, in die eine Formschwelle der Hülsenwand der Zylinderhülse zum Beispiel formschlüssig und/oder konturangepasst einragt.

Nachfolgend ist ein Ausführungsbeispiel der Erfindung anhand der beigefügten Figuren beschrieben. Es zeigen:
- Fig. 1 und 2: eine Fahrzeug-Befestigungsanordnung in unterschiedlichen Ansichten;
- Fig. 3 bis 5: Ansichten, anhand derer die Herstellung des erfindungsgemäßen Abstandhalters veranschaulicht ist.

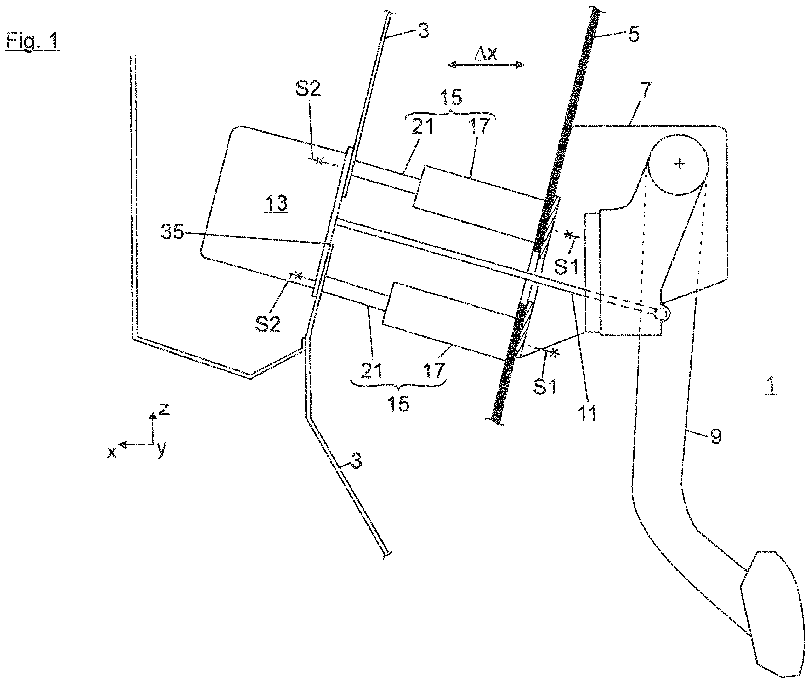

In der Fig. 1 ist ein fahrerseitiger Fußraum 1 in einem Fahrzeuginnenraum eines zweispurigen Fahrzeugs nach fahrzeugvorne durch eine Spritzwand 3 begrenzt. Im Fußraum 1 befindet sich eine Hilfsstruktur 5, an deren fahrzeughinterer Seite ein Pedalbock 7 montiert ist, der Bestandteil eines Fußhebelwerkes ist. Am Pedalbock 7 ist unter anderem Bremspedal 9 schwenkbar angelenkt, das über eine Betätigungsstange 11 mit einem Bremsgerät 13 in kraftübertragender Wirkverbindung ist. Das Bremsgerät 13 ist in der Fig. 1 auf einer, dem Fußraum 1 gegenüberliegenden, fahrzeugvorderen Seite der Spritzwand 3 positioniert. Wie aus der Fig. 1 weiter hervorgeht, sind die Pedalbock-Hilfsstruktur 5 und die Spritzwand 3 über einen Längsversatz Δx voneinander beabstandet.

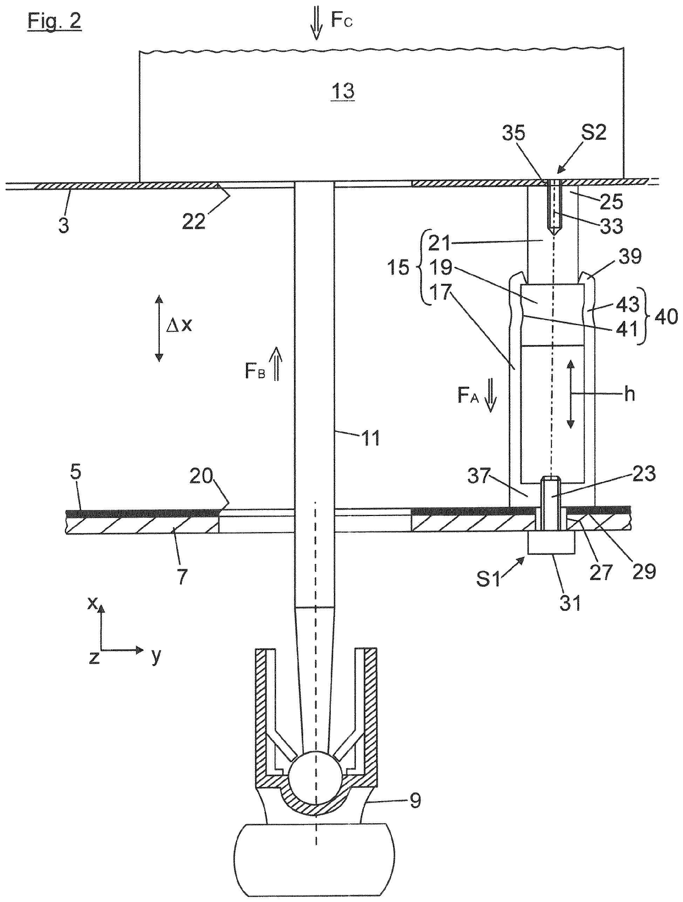

Das Bremsgerät 13 und der Pedalbock 7 sind mit Hilfe von zwei Abstandhaltern 15 befestigt, von denen in der Fig. 2 einer in Schnittdarstellung gezeigt ist. Dieser ist als eine Kolben-Zylinder-Einheit realisiert, die eine Zylinderhülse 17 mit einem darin teleskopartig verschiebbar geführten Kolben 19 aufweist. Der Kolben 19 ist über seine Kolbenstange 21 an einer fahrzeugvorderen Schraubstelle S2 angebunden, während die Zylinderhülse 17 an einer fahrzeughinteren Schraubstelle S1 angebunden ist. Die fahrzeughintere Schraubstelle S1 weist einen Schraubbolzen 23 auf, der durch ein Schraubloch 27 des Pedalbock 7 und durch ein Schraubloch 29 der Hilfsstruktur 5 geführt ist und in Gewindeeingriff mit einem Innengewinde eines Zylinderbodens 37 der Zylinderhülse 17 des Abstandhalters 15 ist. Auf diese Weise ist der Pedalbock 7 und die Hilfsstruktur 5 zwischen dem Schraubkopf 31 des Schraubbolzens 23 und dem Zylinderboden 37 der Zylinderhülse 17 verspannt.

Die fahrzeugvordere Schraubstelle S2 weist einen am Bremsgerät 13 angeformten Schraubbolzen 33 auf, der durch ein Schraubloch 35 der Spritzwand 3 geführt ist und in Gewindeeingriff mit einem Innengewinde am Kolbenstangenkopf 25 des Abstandhalters 15 verschraubt ist. Auf diese Weise ist der die Spritzwand 3 zwischen einer Montagefläche des Bremsgeräts 13 und dem Kolbenstangenkopf 25 des Abstandhalters 15 verspannt.

Die Betätigungsstange 11 ist durch einen Hilfsstruktur-Durchlass 20 und durch einen Spritzwand-Durchlass 22 geführt.

Wie aus der Fig. 2 weiter hervorgeht, befindet sich der Kolben 19 mit einem kolbenstangenseitigen Endanschlag 39 der Zylinderhülse 17 in Anlage. Zudem weist der Kolben 19 eine umlaufende Ringnut 41 auf, in die eine Formschwelle 43 der Hülsenwand der Zylinderhülse 17 formschlüssig einragt, und zwar unter Bildung einer im Crashfall lösbaren Formschlussverbindung 40.

Bei einer, im normalen Fahrbetrieb erfolgenden Bremspedalbetätigung drückt die Betätigungsstange 11 mit einer Betätigungskraft F_{B} in Richtung auf das fahrzeugvordere Bremsgerät 13. In diesem Fall wirken die beiden Abstandhalter 15 als bauteilsteife Zuganker, die jeweils einen Zugkraftpfad zwischen dem Bremsgerät 13 und dem Pedalbock 7 bereitstellen. Im Zugkraftpfad baut sich eine der Betätigungskraft F_{B} entgegenwirkende Ausgleichkraft F_{A} auf, wodurch die Hilfsstruktur 5 und die Spritzwand 3 kräftemäßig entlastet werden. Bei der Beaufschlagung mit der Betätigungskraft F_{B} wird der Kolben 19 in Zugrichtung mit der Ausgleichkraft F_{A} gegen den Endanschlag 39 der Zylinderhülse 17 gedrückt, so dass keine Hubverstellung des Kolbens 19 innerhalb der Zylinderhülse 17 erfolgt.

Bei einem Frontalcrash ergibt sich folgende Situation: So wirkt eine nach fahrzeughinten gerichtete Crashkraft Fc auf das Bremsgerät 13 ein. In diesem Fall werden die beiden Abstandhalter 15 auf Druck beansprucht. Die Abstandhalter 15 sind bei einer solchen Druckbelastung nicht mehr bauteilsteif, sondern vielmehr nachgiebig. Dabei wird durch Einwirken der Crashkraft Fc die Formschlussverbindung 40 gelöst und ein Crashhubweg h freigegeben, über den sich der Kolben 19 innerhalb der Zylinderhülse 17 teleskopartig verschieben kann. Auf diese Weise wirken die beiden Abstandhalter 15 im Crashfall nicht als bauteilsteife Blockbildner, die in Richtung auf den Fahrzeuginnenraum verlagert werden.

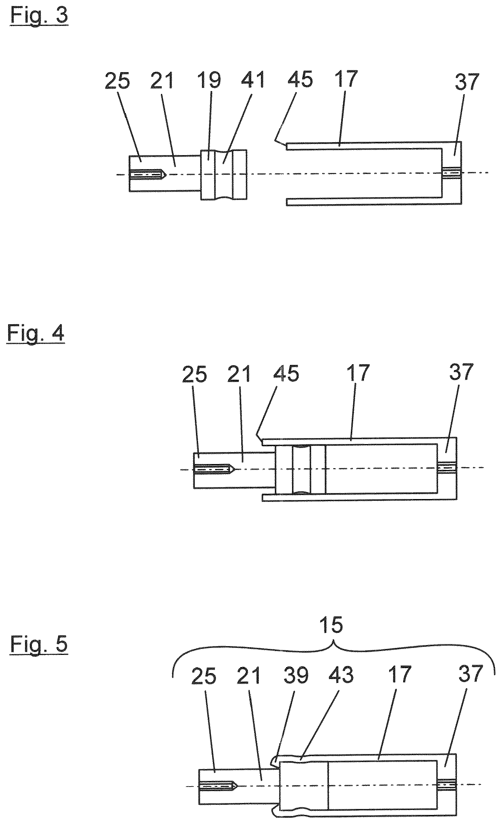

Nachfolgend wird anhand der Fig. 4 bis 6 beispielhaft ein Herstellungsprozess eines erfindungsgemäßen Abstandhalters 15 angedeutet: Demnach wird zunächst der Kolben 15 mitsamt Kolbenstange 21 durch eine stirnseitige Einschuböffnung 45 in die Zylinderhülse 17 eingeschoben. Anschließend wird die Einschuböffnung 45 der Zylinderhülse 17 zum Beispiel durch Kaltumformung umlegt (das heißt verstemmt) bzw. die Zylinderhülse 17 im Bereich ihrer Einschuböffnung 45 verjüngt, und zwar unter Bildung eines durchmesserreduzierten Endanschlages 39. Der Kolben 19 wird in Anlage mit dem Endanschlag 39 gebracht. Im weiteren Prozessverlauf wird zum Beispiel durch Kaltumformen/Kaltschmieden das Material der Zylinderhülse 17 unter Bildung einer Formschwelle 43 in die umlaufende Ringnut 41 des Kolbens 19 eingepresst, um die lösbare Formschlussverbindung 40 zwischen dem Kolben 19 und der Zylinderhülse 17 zu realisieren.

### BEZUGSZEICHENLISTE:

- 1: Fußraum
- 3: Spritzwand
- 5: Hilfsstruktur
- 7: Pedalbock
- 9: Bremspedal
- 11: Betätigungsstange
- 13: Bremsgerät
- 15: Abstandhalter
- 17: Zylinderhülse
- 19: Kolben
- 20: Hilfsstruktur-Durchlass
- 21: Kolbenstange
- 22: Spritzwand-Durchlass
- 23: Schraubbolzen
- 25: Kolbenstangenkopf
- 27: Schraubloch
- 29: Schraubloch
- 31: Schraubkopf
- 33: Schraubbolzen
- 35: Schraubloch
- 37: Zylinderboden
- 29: Endanschlag
- 40: Formschlussverbindung
- 41: Ringnut
- 43: Formschwelle
- S1: fahrzeughintere Schraubstelle
- S2: fahrzeugvordere Schraubstelle
- Δx: Längsversatz
- h: Crashhubweg
- Fc: Crashkraft
- F_{B}: Betätigungskraft
- F_{A}: Ausgleichkraft

## Patentansprüche

1. Fahrzeug-Befestigungsanordnung, mit einem an einem Pedalbock (7) angelenkten Bremspedal (9), das über eine Betätigungsstange (11) mit einem Bremsgerät (13) kraftübertragend verbunden ist, wobei das Bremsgerät (13) an einer fahrzeugvorderen Seite einer Bremsgeräte-Tragstruktur (3), angeordnet ist, und der Pedalbock (7) an einer fahrzeughinteren Seite einer Pedalbock-Tragstruktur (5) angeordnet ist, die über einen Längsversatz (Δx) von der Bremsgerät-Tragstruktur (3) beabstandet ist,
**dadurch gekennzeichnet,**
**dass** die Befestigungsanordnung zumindest einen Abstandhalter (15) aufweist, der den Längsversatz (Δx) zwischen der Bremsgerät-Tragstruktur (3) und der Pedalbock-Tragstruktur (5) überbrückt, und dass der Abstandhalter (15) an einer fahrzeugvorderen Fügestelle (S2) am Bremsgerät (13) angebunden ist, und an einer fahrzeughinteren Fügestelle (S1) am Pedalbock (7) angebunden ist, so dass bei einer Bremspedalbetätigung der Abstandhalter (15) in der Fahrzeuglängsrichtung (x) als ein bauteilsteifer Zuganker wirkt, der einen Zugkraftpfad zwischen Bremsgerät (13) und Pedalbock (7) bereitstellt, in dem sich eine der Betätigungskraft (F_{B}) entgegenwirkende Ausgleichskraft (F_{A}) aufbaut.

2. Fahrzeug-Befestigungsanordnung nach Anspruch 1, **dadurch gekennzeichnet, dass** bei einem Frontalcrash eine nach fahrzeughinten gerichtete Crashkraft (F_{C}) auf das Bremsgerät (13) einwirkt, so dass der Abstandhalter (15) auf Druck beansprucht ist, und dass der Abstandhalter (15) bei Druckbelastung nachgiebig ist.

3. Fahrzeug-Befestigungsanordnung nach Anspruch 2, **dadurch gekennzeichnet, dass** im Frontalcrash der Abstandhalter (15) als ein in Fahrzeuglängsrichtung (x) verformbares Deformationselement wirkt, das unter Verformung Crashenergie aufnimmt.

4. Fahrzeug-Befestigungsanordnung nach Anspruch 2 oder 3, **dadurch gekennzeichnet, dass** der Abstandhalter (15) eine Kolben-Zylinder-Einheit ist mit einer Zylinderhülse (17) und einem darin teleskopartig verschiebbar geführten Kolben (19), und dass der Kolben (19) über seine Kolbenstange (21) an der einen Fügestelle (S2) angebunden ist, und die Zylinderhülse (17) an der anderen Fügestelle (S1) angebunden ist.

5. Fahrzeug-Befestigungsanordnung nach Anspruch 4, **dadurch gekennzeichnet, dass** im Crashfall der Kolben (19) in Druckrichtung über einen Crashhubweg (h) in der Zylinderhülse (17) hubverstellbar ist, und/oder dass im normalen Fahrbetrieb der Kolben (19) in Zugrichtung mit der Ausgleichkraft (F_{A}) gegen einen mechanischen Anschlag (39) der Zylinderhülse (17) gedrückt ist.

6. Fahrzeug-Befestigungsanordnung nach Anspruch 5, **dadurch gekennzeichnet, dass** im Crashfall der Kolben (19) unter Verformung des Kolbens (19) und/oder der Zylinderhülse (17) über den Crashhubweg (h) derart verstellbar ist, dass der Crashhubweg (h) erst freigebbar ist, sobald die einwirkende Crashkraft (F_{C}) einen vordefinierten Grenzwert überschreitet.

7. Fahrzeug-Befestigungsanordnung nach einen der vorhergehenden Ansprüche, **dadurch gekennzeichnet, dass** der Abstandhalter (15) mit seinen Stirnseiten auf der Pedalbock-Tragstruktur (5) und auf der Bremsgerät-Tragstruktur (3) abgestützt ist, und dass an der fahrzeughinteren Schraubstelle (S1) der Pedalbock (7) unter Zwischenlage der Pedalbock-Tragstruktur (5) mit dem Abstandhalter (15) verspannt ist, und/oder dass an der fahrzeugvorderen Schraubstelle (S2) das Bremsgerät (13) unter Zwischenlage der Bremsgeräte-Tragstruktur (3) mit dem Abstandhalter (15) verspannt ist.

8. Fahrzeug-Befestigungsanordnung nach Anspruch 7, **dadurch gekennzeichnet, dass** an der fahrzeugvorderen Schraubstelle (S2) das Bremsgerät (13) unter Zwischenlage der Bremsgeräte-Tragstruktur (3) mit dem Kolbenstangenkopf (21) des Abstandhalters (15) verschraubt ist, und/oder dass an der fahrzeughinteren Schraubstelle (S1) der Pedalbock (7) unter Zwischenlage der Pedalbock-Tragstruktur (5) mit einem Zylinderboden (37) der Zylinderhülse (17) des Abstandhalters (15) verschraubt ist.

9. Fahrzeug-Befestigungsanordnung nach Anspruch 8, **dadurch gekennzeichnet, dass** im normalen Fahrbetrieb der Kolben (19) an einem kolbenstangenseitigen Endanschlag (39) der Zylinderhülse (17) in Anlage ist, wodurch bei Zugbelastung des Abstandhalters (15) eine Kolbenbewegung unterbunden ist.

10. Fahrzeug-Befestigungsanordnung nach Anspruch 8 oder 9, **dadurch gekennzeichnet, dass** der Kolben (19) in Formschlussverbindung (40) mit der Hülsenwand der Zylinderhülse (17) ist, die eine Crashhubbewegung des Kolbens (19) hemmt, und dass durch Einwirken der Crashkraft (F_{C}) die Formschlussverbindung (40) lösbar ist und der Crashhubweg (h) freigegeben wird, und dass zur Ausbildung der Formschlussverbindung (40) der Kolben (19) eine umlaufende Ringnut (41) aufweist, in die eine Formschwelle (43) der Hülsenwand der Zylinderhülse (17) formschlüssig einragt.

## Claims

1. Vehicle mounting assembly comprising a brake pedal (9) which is linked to a pedal holder (7) and connected to a braking device (13) via an actuation rod (11) in a force-transmitting manner, wherein the braking device (13) is arranged on a vehicle-front side of a braking device support structure (3), and the pedal holder (7) is arranged on a vehicle-rear side of a pedal holder support structure (5), which is spaced apart from the braking device support structure (3) by a longitudinal offset (Δx),
**characterized in that:**
the mounting assembly comprises at least one spacer (15) that bridges the longitudinal offset (Δx) between the braking device support structure (3) and the pedal holder support structure (5), and **in that** the spacer (15) is connected to the braking device (13) at a vehicle-front connection point (S2) and is connected to the pedal holder (7) at a vehicle-rear connection point (S1), such that during actuation of the brake pedal the spacer (15) acts in the vehicle longitudinal direction (x) as a structurally rigid tie rod that provides a tensile force path between the braking device (13) and the pedal holder (7), in which a compensating force (F_{A}) counteracting the actuating force (F_{B}) builds up.

2. Vehicle mounting assembly according to claim 1, **characterized in that,** in the event of a frontal crash, a crash force (F_{C}) directed towards the rear of the vehicle acts on the braking device (13) so that the spacer (15) is subjected to pressure, and **in that** the spacer (15) is compliant under compressive stress.

3. Vehicle mounting assembly according to claim 2, **characterized in that,** in the event of a frontal crash, the spacer (15) acts as a deformation element which is deformable in the longitudinal direction of the vehicle (x), which deformation element absorbs crash energy through deformation.

4. Vehicle mounting assembly according to claim 2 or 3, **characterized in that** the spacer (15) is a piston-cylinder unit comprising a cylinder sleeve (17) and a piston (19) guided telescopically therein, and **in that** the piston (19) is connected via its piston rod (21) to one connection point (S2), and the cylinder sleeve (17) is connected to the other connection point (S1).

5. Vehicle mounting assembly according to claim 4, **characterized in that,** in the event of a crash, the piston (19) is movable in the compression direction over a crash stroke (h) within the cylinder sleeve (17), and/or **in that** during normal vehicle operation, the piston (19) is pressed in the tension direction by the compensating force (F_{A}) against a mechanical stop (39) of the cylinder sleeve (17).

6. Vehicle mounting assembly according to claim 5, **characterized in that,** in the event of a crash, the piston (19) is adjustable over the crash stroke (h) with deformation of the piston (19) and/or the cylinder sleeve (17) such that the crash stroke (h) can only be released once the acting crash force (F_{c}) exceeds a predefined threshold value.

7. Vehicle mounting assembly according to any one of the preceding claims, **characterized in that** the spacer (15) is supported with its end faces on the pedal holder support structure (5) and on the braking device support structure (3), and **in that** at the vehicle-rear screw connection point (S1) the pedal holder (7) is clamped to the spacer (15) with the interposition of the pedal holder support structure (5), and/or **in that** at the vehicle-front screw connection point (S2) the braking device (13) is clamped to the spacer (15) with the interposition of the braking device support structure (3).

8. Vehicle mounting assembly according to claim 7, **characterized in that** at the vehicle-front screw connection point (S2) the braking device (13) is screwed to the piston rod head (21) of the spacer (15) with the interposition of the braking device support structure (3), and/or **in that** at the vehicle-rear screw connection point (S1) the pedal holder (7) is screwed to a cylinder base (37) of the cylinder sleeve (17) of the spacer (15) with the interposition of the pedal holder support structure (5).

9. Vehicle mounting assembly according to claim 8, **characterized in that,** during normal operation, the piston (19) abuts against an end stop (39) on the piston rod side of the cylinder sleeve (17), whereby the piston is prevented from moving when the spacer (15) is subjected to tensile stress.

10. Vehicle mounting assembly according to claim 8 or 9, **characterized in that** the piston (19) is in a form-fit connection (40) with the sleeve wall of the cylinder sleeve (17), which inhibits a crash stroke movement of the piston (19), and **in that** the form-fit connection (40) can be released by the crash force (F_{c}) and the crash stroke (h) is released, and **in that** to form the form-fit connection (40) the piston (19) has a circumferential annular groove (41) into which a positive-fit shoulder (43) of the sleeve wall of the cylinder sleeve (17) engages in a form-fit manner.

## Revendications

1. Ensemble de montage de véhicule, avec une pédale de frein (9) articulée à un support de pédale (7) qui est reliée par transmission de force à un appareil de freinage (13) par le biais d'une tige d'actionnement (11), dans lequel l'appareil de freinage (13) est agencé au niveau d'un côté avant du véhicule d'une structure porteuse d'appareil de freinage (3), et le support de pédale (7) est agencé au niveau d'un côté arrière du véhicule d'une structure porteuse de support de pédale (5) qui est espacée de la structure porteuse d'appareil de freinage (3) par l'intermédiaire d'un déport longitudinal (Δx),
**caractérisé en ce que :**
l'ensemble de montage présente au moins un élément d'écartement (15) qui ponte le déport longitudinal (Δx) entre la structure porteuse d'appareil de freinage (3) et la structure porteuse de support de pédale (5) et **en ce que** l'élément d'écartement (15) est lié en un point de jonction (S2) avant du véhicule à l'appareil de freinage (13), et est lié en un point de jonction arrière du véhicule (51) au support de pédale (7) de sorte que lors d'un actionnement de la pédale de frein, l'élément d'écartement (15) agisse dans le sens longitudinal du véhicule (x) comme une tige de traction à composant rigide qui fournit un chemin de force de traction entre l'appareil de freinage (13) et le support de pédale (7), dans lequel une force de compensation (_{FA}) agissant contre la force d'actionnement (F_{B}) s'établit.

2. Ensemble de montage de véhicule selon la revendication 1, **caractérisé en ce que** lors d'une collision frontale, une force de collision (F_{c}) dirigée vers l'arrière du véhicule agit sur l'appareil de freinage (13) de sorte que l'élément d'écartement (15) soit soumis à une pression, et **en ce que** l'élément d'écartement (15) est flexible en cas de charge de pression.

3. Ensemble de montage de véhicule selon la revendication 2, **caractérisé en ce qu'**en cas de collision frontale, l'élément d'écartement (15) agit comme un élément de déformation déformable dans le sens longitudinal du véhicule (x) qui reçoit l'énergie de la collision sous déformation.

4. Ensemble de montage de véhicule selon la revendication 2 ou 3, **caractérisé en ce que** l'élément d'écartement (15) est une unité à piston et cylindre avec une douille de cylindre (17) et un piston (19) guidé en déplacement télescopique à l'intérieur, et **en ce que** le piston (19) est lié à l'un point de jonction (S2) par le biais de sa tige de piston (21), et la douille de cylindre (17) est liée à l'autre point de jonction (S1).

5. Ensemble de montage de véhicule selon la revendication 4, **caractérisé en ce qu'**en cas de collision, le piston (19) est réglable en hauteur dans le sens de pression sur une course de levage de collision (h) dans la douille de cylindre (17) et/ou **en ce qu'**en mode de conduite normal, le piston (19) est pressé dans le sens de traction avec la force de compensation (F_{A}) contre une butée mécanique (39) de la douille de cylindre (17).

6. Ensemble de montage de véhicule selon la revendication 5, **caractérisé en ce qu'**en cas de collision, le piston (19) est réglable en déformant le piston (19) et/ou la douille de cylindre (17) sur la course de levage de collision (h) de telle manière que la course de levage de collision (h) soit libérable seulement dès que la force de collision qui agit (F_{c}) dépasse une valeur limite prédéfinie.

7. Ensemble de montage de véhicule selon l'une quelconque des revendications précédentes, **caractérisé en ce que** l'élément d'écartement (15) est en appui avec ses côtés avant sur la structure porteuse de support de pédale (5) et sur la structure porteuse d'appareil de freinage (3), et **en ce qu'**au point de vissage arrière du véhicule (S1), le support de pédale (7) est serré en intercalant la structure porteuse de support de pédale (5) avec l'élément d'écartement (15), et/ou **en ce qu'**au point de vissage avant du véhicule (S2), l'appareil de freinage (13) est serré en intercalant la structure porteuse d'appareil de freinage (3) avec l'élément d'écartement (15).

8. Ensemble de montage de véhicule selon la revendication 7, **caractérisé en ce qu'**au point de vissage avant du véhicule (S2), l'appareil de freinage (13) est vissé en intercalant la structure porteuse d'appareil de freinage (3) avec la tête de tige de piston (21) de l'élément d'écartement (15) et/ou **en ce qu'**au point de vissage arrière du véhicule (51), le support de pédale (7) est vissé en intercalant la structure porteuse de support de pédale (5) avec un fond de cylindre (37) de la douille de cylindre (17) de l'élément d'écartement (15).

9. Ensemble de montage de véhicule selon la revendication 8, **caractérisé en ce qu'**en mode de conduite normal, le piston (19) est en appui sur une butée finale (39) côté tige de piston de la douille de cylindre (17), selon lequel un mouvement de piston est évité en cas de charge de traction de l'élément d'écartement (15).

10. Ensemble de montage de véhicule selon la revendication 8 ou 9, **caractérisé en ce que** le piston (19) est en liaison par complémentarité de formes (40) avec la paroi de la douille de cylindre (17) qui bloque un mouvement de levage de collision du piston (19), et **en ce que** par l'action de la force de collision (F_{C}), la liaison par complémentarité de formes (40) est détachable et la course de levage de collision (h) est libérée, et **en ce que** pour l'établissement de la liaison par complémentarité de formes (40), le piston (19) présente une rainure annulaire (41) périphérique, dans laquelle une traverse profilée (43) de la paroi de douille de la douille de cylindre (17) pénètre par complémentarité de formes.
